Europäisches Patentamt

European Patent Office

Office européen des brevets

(11) Publication number: **0 131 028**
**B1**

# EUROPEAN PATENT SPECIFICATION

(45) Date of publication of patent specification: **28.10.87**

(21) Application number: **84900412.2**

(22) Date of filing: **28.12.83**

(86) International application number:
**PCT/SE83/00483**

(87) International publication number:
**WO 84/02766 19.07.84 Gazette 84/17**

(51) Int. Cl.⁴: **F 24 J 3/06, F 24 D 11/02**

(54) **METHOD FOR STORING THERMAL ENERGY FOR A HEAT PUMP INSTALLATION.**

(30) Priority: **30.12.82 SE 8207501**

(43) Date of publication of application:
**16.01.85 Bulletin 85/03**

(45) Publication of the grant of the patent:
**28.10.87 Bulletin 87/44**

(84) Designated Contracting States:
**AT BE CH DE FR GB LI LU NL**

(56) References cited:
**DE-A-2 552 753**
**FR-A-2 257 869**
**SE-B- 400 829**
**SE-B- 408 470**
**SE-B- 424 019**
**SE-B- 426 342**

(73) Proprietor: **SEDENERGY AB**
**Näsbydalsvägen 13**
**S-183 31 Täby (SE)**

(72) Inventor: **GARDERYD, Hans Ove Magnus**
**Neptunivägen 3**
**S-184 00 Akersberga (SE)**

(74) Representative: **Delmar, John-Ake**
**Östermalmsgatan 45**
**S-114 26 Stockholm (SE)**

## Description

This invention is concerned with a method for operating a heat storage in combination with a heat pump installation employing water from a lake, pond, bay, inlet, cove, river, canal or similar bodies of water having bottom sediments and a substantial horizontal extension as a heat source. According to this method thermal energy is stored in sediments present at the bottom of these bodies of water.

Energy crises during recent years have increasingly directed the attention of energy researchers towards local renewable energy resources. New, alternative energy supplying methods have been devised based on heat pump systems, and their further development is expected to make rapid progress during the next years. Whenever air, ground surface areas, ground subsurface areas of bodies of water are used as heat sources a general problem to be handled is the following: At the time when the temperature of the heat source has dropped to its minimum the demand for heat is at its maximum, and vice versa; that is, the demand for heat is at its minimum in the summer period, when ambient air, ground areas and bodies of water all have acquired a comparatively high temperature. Prior art methods for taking heat energy from natural sources such as subsurface or surface ground areas and bodies of water are based on the utilization of the low temperature levels that are naturally existing in these sources during the winter season; and it is by means of still further lowering the inherently low temperature in the environment of these sources and artificially raising the temperature level to that required for e.g. heating buildings that prior art heat pumps have come to be used in actual practice.

In the bottom sediments of shallow lakes or ponds etc. heat energy will store up spontaneously during the warm season of each year, partly due to direct solar irradiation of the sediment surface and partly due to convection. A lake or pond of 5 to 8 m depth is subject to being stirred up by winds to such a substantial degree that it will not develop any temperature gradient stratification; consequently each summer its entire body of water is heated to the surface water temperature. During the summer period this heating of the water gives rise to a so-called "heat wave" in the bottom sediments. The heat wave will advance downwardly during the summer, at a slow rate; if natural conditions are prevailing the heat wave will reach a depth of about 2.5 to 3.0 m below the bottom sediment surface, depending inter alia on the composition and heat conducting properties of the sediments. Then with the onset of autumn and winter the whole lake is apt to cool down rather quickly so as to finally acquire a coherent ice surface. Once an ice surface is established the movements in the water underneath will stop, and as a result a stratified temperature gradient will now form, with cold water strata immediately under the ice layer and then progressively warmer strata as one goes farther down towards the bottom. Heat conduction in the bottom sediments is quite sluggish and so cannot keep pace with the more rapid temperature changes in the water. During the winter period the aforesaid heat wave in the bottom sediments turns in the opposite direction and moves upwardly in the bottom sediments, thereby warming the lake water from the bottom upwards. Measurements have shown that the mean temperature in the lake water is higher immediately before the ice breaks up in spring than it is immediately before the freezing stage in autumn/winter. This indicates that the movement of the heat wave within the bottom sediments — downward in summer, upward in winter — is very slow indeed.

DE—A—2 552 753 describes a heat pump process wherein water from a well is passed through a tube system in the ground, where the water is preheated by means of the heat naturally accumulated in the ground during the warm season.

It is known from SE—B—424 019 to load or unload a ground heat storage by pumping warm or cold water from a tank through tubes buried in the ground heat storage for the long-term storage of heat.

The present invention comprises a method for operating a heat storage in combination with a heat pump installation employing water from a lake, pond, bay, inlet, cove, river, canal or similar bodies of water having bottom sediments and a substantial horizontal extension as its source of heat. This method is characterized in that during the warm season water drawn from said lake etc. is passed through a tube system installed in said bottom sediments below those layers of the bottom sediments which participate in the natural storage of heat during the warm season, whereby due to the thus resultant temperature increase in said bottom sediments an artificial heat energy storage is accomplished in said sediments below said natural heat storage; and that during the cold season water drawn from said lake etc. is passed first through said tube system to thus acquire a higher temperature and then from said tube system to said heat pump installation.

Thus during the warm season this method achieves an increased heat energy storage in the bottom sediments of e.g. shallow lakes, ponds, bays, inlets, coves, rivers, canals or similar bodies of water having bottom sediments and a substantial horizontal extension; it thus creates an extra store of heat energy at a level below the natural heat energy reserve that is spontaneously built up immediately under the bottom surface of said lake or other similar body of water. This means that the heat storage level is moved further down by some 2.5 to 3 m. When during the summer season the surface water, e.g. in Sweden, reaches a temperature around $+20—25°C$ the water is passed through the tube system, e.g. by means of pumps, and as a consequence the bottom sediments of the lake, river, etc. are heated to surface water temperature about 3 to 6 m below the bottom. At the end of the summer period, the extra energy store thus built up under the bottom of the lake contains 2 to 2.5 times more heat energy than the store of heat energy that can accumulate spontaneously under natural conditions.

The tube system preferably consists of flexible plastic tubes, which can be laid in several rows in one or more layers in the bottom sediments. During the warm season the water passed through said tube system preferably is pumped from a water intake near the surface of said lake etc. The water leaving the tube system may be returned directly to the lake, etc. However, according to a favourable embodiment said water with somewhat decreased temperature is passed first to the heat pump installation (or the part thereof being operated during the summer) and then back to the lake etc. In this manner the heat demand in the summer will be satisfied, and at the same time a heat energy store for the cold season will be built up in the bottom sediments.

When the heat pump is to be operated during the cold season water from the lake etc. is at first passed through the tube system in the bottom sediments and is then fed from those tubes into the heat pump. During its passage through the bottom sediment tubes the water is preheated by heat from the artificially increased store of heat energy, and due to this preheating the operating conditions of the heat pump are greatly improved. It may be noted that the water of the lake etc. not only serves as the heat source for the heat pump but mainly serves as the heat transporting means by which heat energy is carried into the bottom sediment store in summer and is carried out of said store in winter. In winter the water to be fed to the tube system is preferably drawn from an intake arranged near the bottom of the lake, since there the water normally is warmer than it is near the surface, as explained above.

In e.g. Sweden the conditions under which a heat pump installation has to operate are least favorable during the period immediately after an ice layer has formed on the body of water employed, e.g. lake. In that stage the bottom water temperature has reached its minimum, and the energy storage is just below its optimum. If now in accordance with the present invention the lake water is made to pass through the energy store the water will be preheated before it arrives at the heat pump. This preheating of the lake water is highly advantageous in creating favorable dimensioning possibilities: The heat pump, if it is expected to be fed with this type of preheated water, may be given dimensions to correspond to higher evaporation temperatures, which in turn means that capital investment costs can be reduced considerably.

The dimensions for the heat pump installation and those for the energy store in the bottom sediments will be chosen such as to properly harmonize with each other. These dimensions should be optimized in each particular case so as to suit (i) heat production requirements and (ii) natural limitation factors such as for instance the type, thickness and physical properties of the bottom sediments. By optimizing the tube system layout in the bottom sediments in relation to the heating requirements typically arising during the cold season it is possible to establish a reserve of heat energy which every year is gradually consumed during the cold season and then again built up during the warm season.

The method of this invention may be applied to any conventional heat pump installation employing water from a lake or similar body of water as its heat source; for example, the heat pump may be used for heating buildings in nearby residential areas.

**Claims**

1. A method for operating a heat storage in combination with a heat pump installation employing water from a lake, pond, bay, inlet, cove, river, canal or similar bodies of water having bottom sediments and a substantial horizontal extension as its source of heat, characterized in that during the warm season water drawn from said lake etc. is passed through a tube system installed in said bottom sediments below those layers of the bottom sediments which participate in the natural storage of heat during the warm season, whereby due to the thus resultant temperature increase in said bottom sediments an artificial heat energy storage is accomplished in said sediments below said natural heat storage; and that during the cold season water drawn from said lake etc. is passed first through said tube system to thus acquire a higher temperature and then from said tube system to said heat pump installation.

2. A method according to claim 1, characterized in that during the warm season the water passed through said tube system is drawn from a water intake near the surface of said lake etc.

3. A method according to claim 1, characterized in that during the cold season the water passed through said tube system is drawn from a water intake near the bottom of said lake etc.

**Patentansprüche**

1. Verfahren zum Betreiben eines Wärmespeichers in Kombination mit einer Wärmepumpenanlage, die Wasser von einem See, einem Teich, einem Meeresbusen, einer Bucht, einem Fluß, einem Kanal oder einem ähnlichen Gewässer mit Bodensedimenten und einer im wesentlichen horizontalen Erstreckung als Wärmequelle verwendet, dadurch gekennzeichnet, daß während der warmen Jahreszeit Wasser, das von dem See usw. abgezogen wird, durch ein Rohrleitungssystem geführt wird, das in den Bodensedimenten unter denjenigen Schichten der Bodensedimente verlegt ist, die an der natürlichen Speicherung von Wärme während der warmen Jahreszeit teilhaben, wodurch infolge des sich somit ergebenden Temperaturanstiegs in den Bodensedimenten ein künstlicher Wärmeenergiespeicher in den Sedimenten unter dem natürlichen Wärmespeicher gebildet wird, und daß während der kalten Jahreszeit Wasser, das vom See usw. abgezogen wird, zunächst durch das Rohrleitungssystem, um eine höhere Temperatur zu bekommen, und dann vom Rohrleitungssystem in die Wärmepumpenanlage geleitet wird.

2. Verfahren nach Anspruch 1, dadurch gekennzeichnet, daß während der warmen Jahreszeit das Wasser, das durch das Rohrleitungssystem geführt wird, von einer Wasseransaugstelle in der Nähe der Oberfläche des Sees usw. abgezogen wird.

3. Verfahren nach Anspruch 1, dadurch gekennzeichnet, daß während der kalten Jahreszeit das Wasser, das durch das Rohrleitungssystem geleitet wird, von einer Wasseransaugstelle in der Nähe des Bodens des Sees usw. abgezogen wird.

**Revendications**

1. Procédé de réalisation d'un stockage de chaleur en combinaison avec une installation de pompe à chaleur utilisant, comme source de chaleur, de l'eau provenant d'un lac, d'un étang, d'une baie, d'une crique, d'une anse, d'une rivière, d'un canal ou de volumes d'eau analogues présentant des sédiments de fond et une extension horizontale importante, caractérisé en ce qu'au cours de la saison chaude on fait passer de l'eau tirée dudit lac etc. à travers un système de tubes installé dans lesdits sédiments de fond, en dessous des couches des sédiments de fond qui participent au stockage naturel de la chaleur au cours de la saison chaude, ce par quoi, du fait de l'accroissement de température qui en résulte dans lesdits sédiments de fond, on réalise un stockage artificiel d'énergie thermique dans lesdits sédiments, en dessous dudit stockage naturel de chaleur; et en ce qu'au cours de la saison froide, on fait passer l'eau tirée dudit lac etc. tout d'abord à travers ledit système de tubes pour y acquérir une température plus élevée, puis, dudit système de tubes, dans ladite installation de pompe à chaleur.

2. Procédé selon la revendication 1, caractérisé en ce qu'au cours de la saison chaude l'eau que l'on fait passer à travers ledit système de tubes est tirée à partir d'une prise d'eau proche de la surface dudit lac etc.

3. Procédé selon la revendication 1, caractérisé en ce qu'au cours de la saison froide l'eau que l'on fait passer à travers ledit système de tubes est tirée à partir d'une prise d'eau proche du fond dudit lac etc.